# EUROPEAN PATENT SPECIFICATION

(11) **EP 3 335 935 B1**
(45) Date of publication and mention of the grant of the patent: **13.11.2019**
(21) Application number: 16203806.1
(22) Date of filing: 13.12.2016
(51) Int. Cl.: B60Q 1/05, B60F 5/02

(54) **CONFIGURABLE LIGHTS FOR FLYING CAR**
KONFIGURIERBARE LEUCHTEN FÜR EIN FLIEGENDES AUTO
ÉCLAIRAGE CONFIGURABLE POUR VOITURE VOLANTE

(43) Date of publication of application: 20.06.2018
(73) Proprietor: AeroMobil R&D, s. r. o., 82106 Bratislava-mestska cast Podunajske Biskupice (SK)
(72) Inventor: MACANDREW, Doug, 841 06 Bystrica (SK); ROOMS, Simon, 841 02 Bratislava (SK); OLSSON, Mikael, London, E4 9LB (GB); ROACH, Alan, 0788 Oslo (NO); DANKO, Adam, 900 31 Slovak Republik (SK)
(74) Representative: Finnegan Europe LLP

(56) References cited:
- WO-A1-2013/032409
- FR-A- 1 475 636
- FR-A1- 2 430 870
- US-A- 5 243 503
- US-A- 5 355 131

## Description

This invention relates to vehicles that are configurable for air use (flying) and road use (driving). Such vehicles are commonly known as flying cars or roadable aircraft (hereafter "flying cars"). In particular, the invention relates to a configurable light unit that can be deployed in different positions for road use and air use.

There have been a number of previous proposals for flying car designs, i.e. vehicles that can be fully compliant with legal and practical requirements for both road and flight use. Examples include the Terrafugia Transition (WO 2007/114877), the Carplane (http://carplane.de/), the AeroMobil (WO 2013/032409), and the Moller Skycar (http://moller.com/).

FR 2430870 A1 relates to a storable light assembly mounted on a side of a vehicle for movement between a stored and protected position during operation of the vehicle in a work environment and an extended position on a side of the vehicle during roading of the vehicle with the light assembly operational in both positions. US 5,243,503 A relates to fog-light assembly mounted on a front bumper of a car, the fog-light assembly having means for exposing a pair of fog lights beside a plate when in a working position and for hiding the pair of fog lights behind the plate when in an idle position.

US 5,355,131 A relates to an aircraft landing light that may be pivoted over a range of angular operational positions. FR 1475636 A relates to a light projector mounted on a lateral side of a vehicle that can be pivoted into a working position of the light projector being perpendicular to the side of vehicle in order to illuminate the side of the road on which the vehicle is travelling in the direction of the vehicle travelling.

Road use regulations typically require the presence of headlamps or light projector units at the front of the vehicle that are operable to project a beam of predefined pattern ahead of the vehicle to assist operation in low light conditions. Such regulations often prescribe maximum and minimum heights, and minimum distances from the outer extremities of the vehicle, as well as beam pattern and brightness. The requirement for the position of the lighting projector units can often be such that it compromises the frontal aspect of the vehicle and provides extra drag detrimental to aerodynamic performance. Alternatively, lighting projector units housed within the vehicle body are often compromised in lighting performance.

This invention is an attempt to provide a light deployment that is optimized for road use while allowing for reduced drag in flight.

According to aspects of the invention, there are provided a vehicle configurable for air or road use, as recited in claim 1, and methods of operating a vehicle, as recited in claims 10 and 11.

A first aspect of the invention provides a vehicle configurable for air or road use, comprising: a body; a pair of road wheels located on either side of a front region of the body and moveable between a first configuration in which the wheels are positioned close to the body for air use, and a second configuration in which the wheels are extended laterally from the body for supporting the body when configured for road use, the spacing between the wheels being greater in the second configuration than in the first configuration; a fender associated with each road wheel, the fenders being movable with the wheels so as to maintain their position relative to the wheels when in the first and second configurations, and a pair of light projector units mounted near the front of the body; wherein the light projector units are mounted so as to be moveable between a first position in which the light projector units are positioned close to the body, and a second position in which the light projector units are extended laterally from the body, the spacing between the light projector units being greater in the second position than in the first position, and wherein the outermost parts of the light projector units are closer to the body than the outermost parts of the fenders when the wheels are in the second configuration and the light projector units are in the second position.

In addition to the body, the vehicle can also comprise a pair of wings moveable between a folded position for road use and an extended position for air use; a tail structure; and moveable control surfaces on the wings and tail for air use. In some embodiments, the pair of road wheels are driven, in which case a common motor can used to drive to both the pair of road wheels and a propeller.

The front region of the body can further comprise a shield, and each light projector unit can be positioned behind a respective shield portion when in the first position. The shield portions can be transparent.

The light projector units can be provided with an independent deployment mechanism such that movement of the light projector units between the first and second positions is independent of movement of the wheels between the first and second configurations.

Each light projector unit can be mounted on a carrier configured such that the outer part of each carrier is substantially aligned with the outer surface of the body when in the first position.

The light projector units can be operated as landing and taxi lights when in the first position, and as headlamps for road use when in the second position.

A second aspect of the invention provides methods of operating the vehicle according to the first aspect.

One method of operating the vehicle to transition from a road use configuration in which the wheels are in the second configuration and the light projector units are in the second position, to an air use configuration in which the wheels are in the first configuration and the light projector units are in the first position, comprises: moving the light projector units from the second position to the first position while the wheels are in contact with the ground; operating the vehicle to take off from the ground; and once airborne, moving the wheels from the second configuration to the first configuration.

One method of operating the vehicle to transition from an air use configuration in which the wheels are in the first configuration and the light projector units are in the first position, to a road use configuration in which the wheels are in the second configuration and the light projector units are in the second position, comprises: moving the wheels from the first configuration to the second configuration which the vehicle is in the air; operating the vehicle to land on the ground; and moving the light projector units from the first position to the second position when the wheels are in contact with the ground.

Further variations can be made within the scope of the invention.

Figure 1 shows a front perspective view of a flying car in a flight configuration;
Figure 2 shows a front perspective view of a flying car in a road use configuration;
Figure 3 shows details of a light projector unit used in the vehicle of Figures 1 and 2.

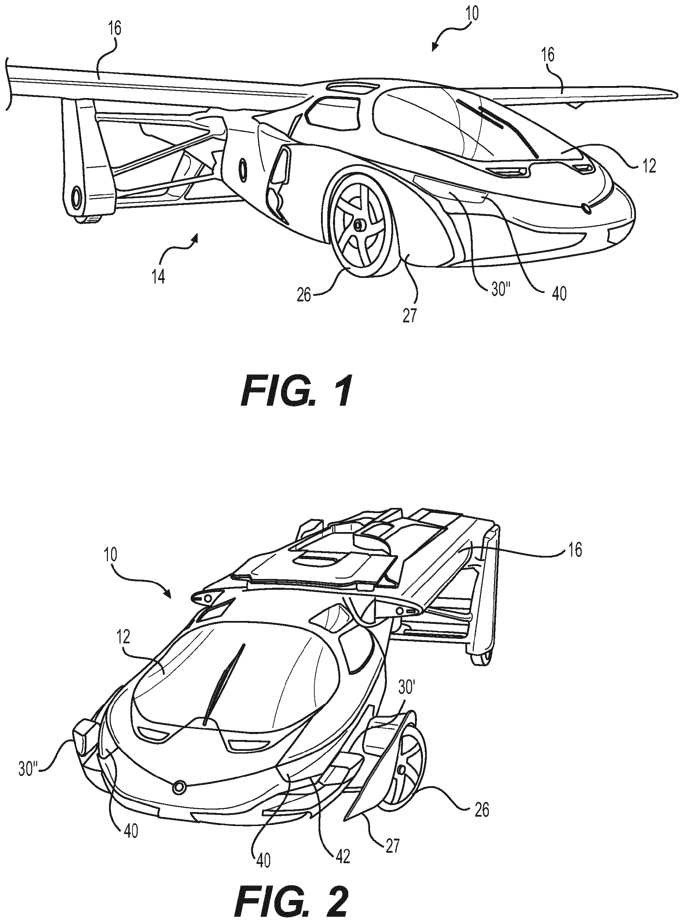

Referring to Figures 1 and 2, an aircraft comprising a convertible vehicle (a flying car) is shown, in a flight configuration (Figure 1) and a road use configuration (Figure 2). The flying car comprises a body structure 10 providing a crew compartment 12 and housing a motor (not shown) and propeller shaft (not shown) that extends from the motor to the rear 14 of the body structure 10, where the propeller is mounted as is described below. Wings 16 for providing lift and control (via ailerons, not shown) are mounted at the top of the body 10 immediately behind the crew compartment 12. The wings 16 can be moved between an extended position for flight use (Figure 1), and a folded position for road use (Figure 2). In the folded position, the wings lie along the top of the body 10, the long axis of the wings lying substantially parallel to the long axis of the body 10. The folding mechanism is substantially as described in WO 2013/032409.

Front wheels 26 are mounted on the body structure 10. The front wheels are both steerable and driven. Each wheel 26 has an associated fender 27. In addition, the front wheels 26 and fenders 27 can be moved between a retracted position (Figure 1) in which they are positioned close to the body 10, the fenders 27 fitting closely with the outer surface of the body 10, to reduce drag in flight; and an open position (Figure 2) in which they are positioned for improved traction and control for road use. In the open position, the fenders 27 can be positioned with respect to the wheels 26 so as to comply with road use regulatory requirements with regard to exposure of the wheels. It is also possible to include marker lights and direction indicator repeaters on the fenders 27.

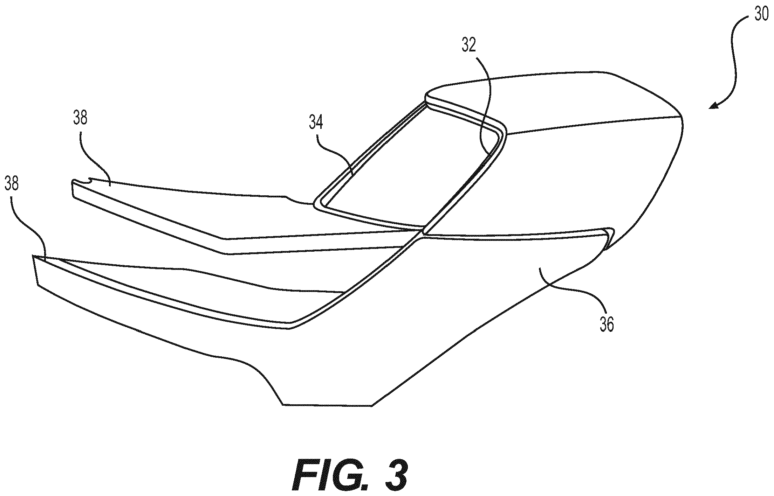

Light projector units 30', 30" are provided at the front of the body 10 and are operable to project beams of light in a predetermined direction and having a predetermined shape. One such light projector unit 30 is shown in Figure 3 and comprises a light housing 32 including one or more bulbs and internally configured reflective surfaces (not shown), and a front cover 34 that may include lensing elements. The unit 30 can be provided as a sealed unit. Alternatively, one or more bulbs may be replaceable. The unit 30 can be made so as to comply with regulatory requirements for road use, such as size, power, controllability for brightness and beam shape, etc. The housing 32 is mounted on a carrier 36 that is shaped to correspond to the surface of the body 10. The carrier has a pair of lateral support arms 38 for connection with an operating mechanism (not shown).

The front of the body 10 includes transparent shield portions 40 located at its left and right extremities. A light projector unit housing cavity 42 is located behind each shield portion and is dimensioned so that the light housing 32 can fit inside.

In use, movement of the units 30 is achieved by a deployment mechanism comprising electric motor drives (not shown) housed in the front part of the body 10 acting on the lateral support arms 38. Operation of the deployment mechanism can be used to move the lighting units 30 between a first position in which each lighting unit is positioned within a housing cavity 42 behind the transparent shield portions 40, and a second position, in which the lighting units 30 are extended laterally from the body 10 so as to lie close to the inner edge of the fender 27 when the wheels are extended for road use.

When the vehicle is on the ground and configured for road use, the lighting units 30 can be positioned in the second position. In this way the projected light beams can provide optimized illumination of the road ahead when driving at night or in reduced visibility situations. In addition, the position of the units can comply with road use regulations such as maximum and minimum heights, and minimum distance from the outer edges of the vehicle.

When the vehicle is initially configured for flight, the wings 16 are extended. The lighting units 30 are retraced behind the shield portions 40. Because the shield portions are transparent, the lighting units 30 can still be operated as taxiing lights to illuminate the ground ahead of the vehicle as is maneuvers ready for takeoff. However, by positioning the lights behind the shields 40, the drag is reduced. The vehicle will taxi and takeoff with the wheels 26 extended. Once airborne, the wheels and fenders 27 can be retracted, the outer surfaces of the carrier 36 and fender 27 aligning with the outer surface of the body 10 to provide a reduced drag profile.

When the vehicle is to land, the wheels 26 and fenders 27 can be extended and, if necessary, the lighting units 30 operated from behind the shields 40 to illuminate the ground ahead. The lighting units 30 can continue to operate in this fashion until the vehicle taxis to a halt and is reconfigured for road use, at which point the lighting units are extended to the second position as described above.

Various changes can be made while remaining within the scope of the invention. For example, the shield portions may be opaque and separate landing/taxiing lights provided for air use; lighting units may also be provided on the fenders; and direction indicators may be provided as part of the lighting units and/or separately.

## Claims

1. A vehicle configurable for air or road use, comprising:
a body (10);
a pair of road wheels (26) located on either side of a front region of the body (10) and moveable between a first configuration in which the wheels (26) are positioned close to the body (10) for air use, and a second configuration in which the wheels (26) are extended laterally from the body for supporting the body (10) when configured for road use, the spacing between the wheels (26) being greater in the second configuration than in the first configuration;
a fender (27) associated with each road wheel, the fenders (27) being movable with the wheels (26) so as to maintain their position relative to the wheels (26) when in the first and second configurations; **characterised by**
a pair of light projector units (30) mounted near the front of the body (10),
wherein the light projector units (30) are mounted so as to be moveable between a first position in which the light projector units (30) are positioned close to the body (10), and a second position in which the light projector units (30) are extended laterally from the body (10), the spacing between the light projector units (30) being greater in the second position than in the first position, and
wherein the outermost parts of the light projector units (30) are closer to the body (10) than the outermost parts of the fenders (27) when the wheels (26) are in the second configuration and the light projector units (30) are in the second position.

2. A vehicle as claimed in claim 1, wherein each of the light projector units (30) is close to an inner edge of the respective fender (27) when the wheels are in the second configuration and the light projector units (30) are in the second position.

3. A vehicle as claimed in claim 1 or claim 2, wherein the front region of the body (10) further comprises a shield, and wherein each light projector unit is positioned behind a respective shield portion (40) when in the first position.

4. A vehicle as claimed in claim 3, wherein the shield portions (40) are transparent.

5. A vehicle as claimed in any preceding claim, wherein the light projector units (30) are provided with an independent deployment mechanism such that movement of the light projector units (30) between the first and second positions is independent of movement of the wheels (26) between the first and second configurations.

6. A vehicle as claimed in any preceding claim, wherein each light projector unit is mounted on a carrier (36) configured such that the outer part of each carrier (36) is substantially aligned with the outer surface of the body (10) when in the first position.

7. A vehicle as claimed in claim 6, wherein the outermost parts of the fenders (27) are aligned with the outer surface of the body (10) when in the first position.

8. A vehicle as claimed in claim 6 or 7, further comprising a deployment mechanism for moving the light projector units (30) between the first position and the second position, the deployment mechanism comprising electric motor drives housed in the front region of the body (10) and acting on lateral support arms (38) of the carriers (36).

9. A vehicle as claimed in any preceding claim, wherein the light projector units (30) are operable as landing and taxi lights when in the first position, and as headlamps for road use when in the second position.

10. A method of operating a vehicle as claimed in any preceding claim to transition from a road use configuration in which the wheels (26) are in the second configuration and the light projector units (30) are in the second position, to an air use configuration in which the wheels (26) are in the first configuration and the light projector units (30) are in the first position, comprising:
moving the light projector units (30) from the second position to the first position while the wheels (26) are in contact with the ground;
operating the vehicle to take off from the ground; and
once airborne, moving the wheels (26) from the second configuration to the first configuration.

11. A method of operating a vehicle as claimed in any of claims 1 - 9 to transition from an air use configuration in which the wheels (26) are in the first configuration and the light projector units (30) are in the first position, to a road use configuration in which the wheels (26) are in the second configuration and the light projector units (30) are in the second position, comprising:
moving the wheels (26) from the first configuration to the second configuration which the vehicle is in the air;
operating the vehicle to land the ground; and
moving the light projector units from the first position to the second position when the wheels (26) are in contact with the ground.

## Patentansprüche

1. Fahrzeug, das zur Verwendung in der Luft oder auf der Straße konfiguriert werden kann, umfassend:
eine Karosserie (10);
ein Paar Straßenräder (26), die sich auf beiden Seiten eines vorderen Bereichs der Karosserie (10) befinden und zwischen einer ersten Konfiguration, in der die Räder (26) zur Verwendung in der Luft nahe an der Karosserie (10) positioniert sind, und einer zweiten Konfiguration, in der die Räder (26) seitlich von der Karosserie ausgefahren sind, um die Karosserie (10) zu tragen, wenn sie für den Straßenbetrieb konfiguriert ist, bewegt werden können, wobei der Abstand zwischen den Rädern (26) in der zweiten Konfiguration größer ist als in der ersten Konfiguration;
einen Kotflügel (27), der mit jedem Straßenrad assoziiert ist, wobei die Kotflügel (27) mit den Rädern (26) beweglich sind, um ihre Position in Bezug auf die Räder (26) in der ersten und zweiten Konfiguration beizubehalten;
**gekennzeichnet durch** ein Paar von Lichtprojektoreinheiten (30), die nahe der Vorderseite der Karosserie (10) montiert sind, wobei die Lichtprojektoreinheiten (30) montiert sind, sodass sie zwischen einer ersten Position, in der die Lichtprojektoreinheiten (30) nahe an der Karosserie (10) positioniert sind, und einer zweiten Position, in der die Lichtprojektoreinheiten (30) seitlich von der Karosserie (10) ausgefahren sind, bewegt werden können, wobei der Abstand zwischen den Lichtproj ektoreinheiten (30) in der zweiten Position größer ist als in der ersten Position, und wobei die äußersten Teile der Lichtprojektoreinheiten (30) näher an der Karosserie (10) sind als die äußersten Teile der Kotflügel (27), wenn die Räder (26) in der zweiten Konfiguration sind und die Lichtprojektoreinheiten (30) in der zweiten Position sind.

2. Fahrzeug nach Anspruch 1, wobei jede der Lichtprojektoreinheiten (30) nahe zu einer Innenkante des jeweiligen Kotflügels (27) ist, wenn die Räder in der zweiten Konfiguration sind und die Lichtprojektoreinheiten (30) in der zweiten Position sind.

3. Fahrzeug nach Anspruch 1 oder Anspruch 2, wobei der vordere Bereich der Karosserie (10) ferner eine Abschirmung umfasst, und wobei jede Lichtprojektoreinheit hinter einem jeweiligen Abschirmabschnitt (40) positioniert ist, wenn sie in der ersten Position ist.

4. Fahrzeug nach Anspruch 3, wobei die Abschirmabschnitte (40) transparent sind.

5. Fahrzeug nach einem vorherigen Anspruch, wobei die Lichtprojektoreinheiten (30) mit einem unabhängigen Ausfahrmechanismus versehen sind, sodass eine Bewegung der Lichtprojektoreinheiten (30) zwischen der ersten und der zweiten Position unabhängig von der Bewegung der Räder (26) zwischen der ersten und der zweiten Konfiguration ist.

6. Fahrzeug nach einem vorherigen Anspruch, wobei jede Lichtprojektoreinheit auf einem Träger (36) montiert ist, der konfiguriert ist, sodass das äußere Teil von jedem Träger (36) im Wesentlichen mit der Außenfläche der Karosserie (10) ausgerichtet ist, wenn er in der ersten Position ist.

7. Fahrzeug nach Anspruch 6, wobei die äußersten Teile der Kotflügel (27) in der ersten Position mit der Außenfläche der Karosserie (10) ausgerichtet sind.

8. Fahrzeug nach Anspruch 6 oder 7, ferner umfassend einen Ausstellmechanismus zum Bewegen der Lichtprojektoreinheiten (30) zwischen der ersten Position und der zweiten Position, wobei der Ausstellmechanismus Elektromotorantriebe umfasst, die im vorderen Bereich der Karosserie (10) untergebracht sind und auf seitliche Tragarme (38) der Träger (36) wirken.

9. Fahrzeug nach einem vorherigen Anspruch, wobei die Lichtprojektoreinheiten (30) in der ersten Position als Lande- und Rollscheinwerfer und in der zweiten Position als Scheinwerfer zur Straßenverwendung betrieben werden können.

10. Verfahren zum Betreiben eines Fahrzeugs nach einem vorherigen Anspruch, um von einer Straßenverwendungskonfiguration, in der die Räder (26) in der zweiten Konfiguration sind und die Lichtprojektoreinheiten (30) in der zweiten Position sind, zu einer Luftverwendungskonfiguration, in der die Räder (26) in der ersten Konfiguration sind und die Lichtprojektoreinheiten (30) in der ersten Position sind, überzugehen, umfassend:
Bewegen der Lichtprojektoreinheiten (30) von der zweiten Position in die erste Position, während die Räder (26) in Kontakt mit dem Boden sind;
Bedienen des Fahrzeugs zum Abheben von dem Boden;
und nachdem es in der Luft ist, Bewegen der Räder (26) von der zweiten Konfiguration in die erste Konfiguration.

11. Verfahren zum Betreiben eines Fahrzeugs nach einem der Ansprüche 1 - 9, um von einer Luftverwendungskonfiguration, in der die Räder (26) in der ersten Konfiguration sind und die Lichtprojektoreinheiten (30) in der ersten Position sind, zu einer Straßenverwendungskonfiguration, in der die Räder (26) in der zweiten Konfiguration sind und die Lichtprojektoreinheiten (30) in der zweiten Position sind, überzugehen, umfassend:
Bewegen der Räder (26) von der ersten Konfiguration in die zweite Konfiguration, wobei das Fahrzeug in der Luft ist;
Bedienen des Fahrzeugs zum Landen auf dem Boden;
und Bewegen der Lichtprojektoreinheiten von der ersten Position in die zweite Position, wenn die Räder (26) in Kontakt mit dem Boden sind.

## Revendications

1. Véhicule configurable pour des applications aériennes et sur route, comprenant :
une carrosserie (10) ;
une paire de roues de route (26) situées de part et d'autre d'une zone antérieure de la carrosserie (10) et pouvant être déplacées entre une première configuration, dans laquelle les roues (26) sont rapprochées de la carrosserie (10), pour des applications aériennes, et une deuxième configuration, dans laquelle les roues (26) sont déployées latéralement depuis la carrosserie pour supporter la carrosserie (10) lors de sa configuration pour l'utilisation sur route, l'espacement entre les roues (26) dans la deuxième configuration étant supérieur à celui de la première configuration ;
un garde-boue (27) correspondant à chaque roue de route, les garde-boue (27) pouvant être déplacés avec les roues (26) de façon à maintenir leur position relativement aux roues (26) lorsqu'elles se trouvent dans les première et deuxièmes configurations ;
**caractérisé par** une paire d'unités de projection de lumière (30) montées à proximité de l'avant de la carrosserie (10), les unités de projection de lumière (30) étant montées de façon à pouvoir être déplacés entre une première position, dans laquelle les unités de projection de lumière (30) sont positionnées à proximité de la carrosserie (10), et une deuxième position, dans laquelle les unités de projection de lumière (30) sont déployées latéralement depuis la carrosserie (10), l'espacement entre les unités de projection de lumière (30) étant supérieur dans la deuxième position à celui de la première position, et les parties extérieures des unités de projection de lumière (30) étant plus proches de la carrosserie (10) que les parties extérieures des garde-boue (27) lorsque les roues (26) se trouvent dans la deuxième configuration et les unités de projection de lumière (30) se trouvent dans leur deuxième position.

2. Véhicule selon la revendication 1, chacun des unités de projection de lumière (30) étant proches d'un bord intérieur du garde-boue (27) respectif lorsque les roues se trouvent dans la deuxième configuration et les unités de projection de lumière (30) se trouvent dans leur deuxième position.

3. Véhicule selon la revendication 1 ou la revendication 2, la zone antérieure de la carrosserie (10) comprenant en outre un écran, chaque projecteur lumineux étant positionné derrière une partie correspondante de l'écran (40) lorsqu'il se trouve dans sa première position.

4. Véhicule selon la revendication 3, les parties de l'écran (40) étant transparentes.

5. Véhicule selon une quelconque des revendications précédentes, les unités de projection de lumière (30) étant dotées d'un mécanisme de déploiement autonome, de sorte que le déplacement des unités de projection de lumière (30) entre les première et deuxième positions est indépendant du déplacement des roues (26) entre les première et deuxième configurations.

6. Véhicule selon une quelconque des revendications précédentes, chaque projecteur lumineux étant monté sur un support (36) configuré de sorte que la partie extérieure de chaque support (36) est substantiellement alignée avec la surface extérieure de la carrosserie (10) lorsqu'il se trouve dans la première position.

7. Véhicule selon la revendication 6, la partie extérieure des garde-boue (27) étant alignée avec la surface extérieure de la carrosserie (10) lorsqu'elle se trouve dans la première position.

8. Véhicule selon la revendication 6 ou 7, comprenant en outre un mécanisme de déploiement pour le déplacement des unités de projection de lumière (30) entre la première position et la deuxième position, le mécanisme de déploiement comprenant des dispositifs d'entraînement à moteur électrique situés dans la zone antérieure de la carrosserie (10), et agissant sur des bras de support latéraux (38) sur les supports (36).

9. Véhicule selon une quelconque des revendications précédentes, les unités de projection de lumière (30) pouvant être utilisées comme phares d'atterrissage et de roulage, dans la première position, et comme feux de route, dans la deuxième position.

10. Méthode d'utilisation d'un véhicule selon une quelconque des revendications précédentes, pour passer d'une configuration d'utilisation sur route, dans laquelle les roues (26) se trouvent dans la deuxième configuration et les unités de projection de lumière (30) se trouvent dans leur deuxième position, à une configuration d'utilisation aérienne, dans laquelle les roues (26) se trouvent dans la première configuration et les unités de projection de lumière (30) se trouvent dans leur première position, comprenant :
le déplacement des unités de projection de lumière (30) de la deuxième position à la première position alors que les roues (26) se trouvent au contact du sol ;
l'utilisation du véhicule pour décoller ; et,
après le décollage, le déplacement des roues (26) de la deuxième configuration à la première configuration.

11. Méthode d'utilisation d'un véhicule selon une quelconque des revendications 1 - 9 pour passer d'une configuration d'utilisation aérienne, dans laquelle les roues (26) se trouvent dans la première configuration et les unités de projection de lumière (30) se trouvent dans leur première position, à une configuration d'utilisation sur route, dans laquelle les roues (26) se trouvent dans la deuxième configuration et les unités de projection de lumière (30) se trouvent dans leur deuxième position, comprenant :
le déplacement des roues (26) de première configuration à la deuxième configuration, le véhicule étant aéroporté ;
l'utilisation du véhicule pour atterrir ; et
le déplacement des unités de projection de lumière de la première position à la deuxième position lorsque les roues (26) se trouvent au contact du sol.
